**Europäisches Patentamt**

**European Patent Office**

**Office européen des brevets**

(19)

(11) Veröffentlichungsnummer : **0 462 317 B1**

(12) # EUROPÄISCHE PATENTSCHRIFT

(45) Veröffentlichungstag der Patentschrift :
06.10.93 Patentblatt 93/40

(51) Int. Cl.$^5$ : **B01J 19/00, C08F 6/00**

(21) Anmeldenummer : **90124536.5**

(22) Anmeldetag : **18.12.90**

(54) **Vorrichtung und Verfahren zum Fällen von Polymeren.**

(30) Priorität : **13.06.90 DE 4018912**

(43) Veröffentlichungstag der Anmeldung :
**27.12.91 Patentblatt 91/52**

(45) Bekanntmachung des Hinweises auf die
Patenterteilung :
**06.10.93 Patentblatt 93/40**

(84) Benannte Vertragsstaaten :
**BE DE FR GB IT NL**

(56) Entgegenhaltungen :
**DE-A- 2 041 036
DE-B- 1 274 082
US-A- 2 647 103
US-A- 3 179 642
US-A- 3 553 186
US-A- 4 206 161**

(73) Patentinhaber : **BUNAWERKE HÜLS GMBH
Postfach 1320
D-45743 Marl (DE)**

(72) Erfinder : **Breuker, Walter
Am Schmöningsberg 12
W-4358 Haltern (DE)**
Erfinder : **Wagner, Hans
Leverkusener Strasse 27
W-4370 Marl (DE)**
Erfinder : **Möller, Eckhard, Dr.
Guido-Heiland-Strasse 8
W-4370 Marl (DE)**
Erfinder : **Schleimer, Bernhard, Dr.
Peter-Hille-Weg 20
W-4790 Paderborn (DE)**

## Beschreibung

Vorrichtung und Verfahren zum Fällen von Polymeren

Die Erfindung betrifft eine Vorrichtung und ein damit durchzuführendes Verfahren zum Fällen von Polymeren aus polymerhaltigen Flüssigkeiten (Lösungen, Emulsionen oder Suspensionen) mit Hilfe mindestens eines Fluids.

Die Erfindung bezweckt, den Fällvorgang zu vereinfachen und wirtschaftlicher zu gestalten sowie eine für diesen Fällvorgang geeignete Vorrichtung anzugeben.

Es ist bekannt, den Latex in polymeren Latexemulsionen mit Säuren zu koagulieren und dadurch das Polymer zu gewinnen. Hierbei entsteht als Nebenprodukt eine säurehaltige Flüssigkeit, die entweder aufgearbeitet werden muß oder - mit teilweise erheblichem Aufwand - zu entsorgen ist.

Weiter kann man gelöste, suspendierte oder emulgierte Kunststoffe durch Verdampfen des Lösemittels gewinnen; dazu benötigt man - besonders bei Flüssigkeiten mit geringer Konzentration des Kunststoffs - einen erheblichen Aufwand an Energie.

In EP-0 030 994 ist ein Verfahren zum kontinuierlichen Gewinnen von Polymeren aus einer Emulsion beschrieben. Der Latex wird einer mit Wasserdampf beschickten Düse seitlich durch mehrere Kanäle zugeführt, wobei der Latex in eine Teilchendispersion zerteilt wird. Diese Dispersion wird durch einen mit Dampf beheizten Wärmetauscher vom Rohr-in-Rohr-Typ geschickt. Die Dispersion besteht aus dem Polymer in Form fester Teilchen zusammen mit Flüssigkeitsteilchen in einer Dampfphase, die die nicht umgesetzten Monomeren und den Wasserdampf enthält. Die Dampfphase wird anschließend abgetrennt. Anstelle des Wärmetauschers kann eine Waschstufe benutzt werden. Das Verfahren wird angewendet auf nicht-klebende Polymere; bei klebrigen Polymeren sind Verstopfungen an den Düsen, im Wärmetauscher und im Zyklon zu erwarten. Bei den Latizes handelt es sich um wäßrige Emulsionen von Polymeren; diese enthalten kein Lösemittel, das durch Verdampfen ausgetrieben werden muß. Die Verweilzeit der Dispersion aus gefälltem Polymer in Wasser beträgt 0,1 - 1 Sekunde im Austauscher.

In DE-OS 23 65 073 ist eine Vorrichtung zum Fällen von Kunststoffen aus dem Lösemittel unter Verwendung von aufgeheiztem Wasser beschrieben. In die Vorrichtung werden eine den Kunststoff enthaltende Flüssigkeit und aufgeheiztes Wasser unter Druck eingeleitet. Die durch Düsen austretenden Strahlen dieser Flüssigkeit gelangen direkt in einen Zerstäubungsraum; dieser enthält überwiegend verdampftes Lösemittel, verdampftes Wasser und den gefällten Kunststoff. Der Kunststoff fällt - gemeinsam mit nicht verdampftem Wasser - nach unten und trennt sich von der Gasphase. Wegen des spontanen Überganges des gefällten Kunststoffes und des aufgeheizten Wassers in den Gasraum trennen sich die flüssige Phase und die Gasphase schnell voneinander. Im gefällten Kunststoff enthaltene Flüssigkeitsreste und Monomere bleiben in den Kunststoffteilchen eingeschlossen. Die Vorrichtung, insbesondere die Düse für die den Kunststoff enthaltende Flüssigkeit, kann nur nach vorherigem Zerlegen der Vorrichtung gereinigt werden. Ein an den Stellkörper angebrachter sich nach unten verjüngender Ausleger ragt in den Zerstäubungsraum hinein.

In US-3 179 642 wird ein Verfahren zum Aufarbeiten von Polybutadien-Lösungen mit heißem Wasser beschrieben. Die Polymerlösung wird zunächst mit heißem Wasser im Gleichstrom durch ein aufrecht stehendes Rohr gefördert; diese Mischung wird mit etwa 75 °C in den unteren Teil des Rührbehälters unterhalb des Rührers seitlich eingefahren. Im Rührbehälter wird das Wasser mittels Dampf auf etwa 98 °C aufgeheizt, wobei das Lösemittel verdampft und das krümelige Polymerisat gefällt wird. Die Lösemitteldämpfe gehen durch die Flüssigphase im Rührbehälter hindurch und werden über die Gasphase in das Kondensationssystem abgeführt. Dabei wird die Oberfläche der Flüssigphase durch die austretenden Lösemitteldämpfe stark gestört, und die Wirkung des Rührers wird beeinträchtigt. Die Suspension aus Krümeln und Wasser wird gegen die Decke des Behälters geschleudert, und Krümel werden mit dem Gasstrom in das Kondensationssystem getragen. Bei diesem Verfahren wird das Polymer durch relativ langsames Verdampfen des Lösemittels gefällt.

Damit stellt sich die Aufgabe, eine Vorrichtung und ein Verfahren zu finden, mit der und bei dem klebrige oder nicht-klebrige Polymere aus der polymerhaltigen Flüssigkeit vollständig gefällt und möglichst vollständig vom Lösemittel und von Monomeren befreit werden.

Diese Aufgabe wird erfindungsgemäß gelöst durch eine Vorrichtung mit den in Anspruch 1 angegebenen kennzeichnenden Merkmalen.

Die erfindungsgemäße Vorrichtung besteht aus einer Düsenplatte mit Austrittsöffnungen für die das auszufällende Polymere enthaltende Flüssigkeit und Zuleitungen für mindestens ein Fällfluid. Die Austrittsöffnungen und die Zuleitungen für das oder die Fällfluide münden in den Fällraum, aus dem eine Mischung abgezogen wird, die das gefällte Polymere enthält. An den Fällraum ist ein Entgasungsraum angeschlossen, dessen Achse im wesentlichen vertikal verläuft.

Der Fällraum liegt vollständig oberhalb der Düsenplatte; die Achsen der Zuleitungsenden für die Fällfluide verlaufen im wesentlichen senkrecht zu den Achsen der Austrittsöffnungen für die das zu fällende Polymere enthaltende Flüssigkeit.

Die Senkrechte auf der Oberfläche der Düsenplatte bildet mit der Achse des Fällraumes für die das gefällte Polymere enthaltende Flüssigkeit einen Winkel von 10 bis 60 Grad.

Der Entgasungsraum, in den die Mischung mit dem gefällten Polymeren eintritt, ist bevorzugt rohrförmig. Das Rohr hat entweder einen konstanten Querschnitt oder erweitert sich zu seinem Ende hin auf einen Querschnitt, der bis zum 25fachen des Querschnittes beträgt, den das Rohr am Anfang (an der Verbindungsstelle mit dem Fällraum) hat. Die Länge des Rohres beträgt das 30- bis 60fache des Durchmessers am Rohranfang. Das Rohr steht im wesentlichen vertikal und ist ohne nennenswerte Abweichung von der Vertikalen an den Fällraum angeschlossen.

Bevorzugt wird jeder Austrittsöffnung für die das auszufällende Polymere enthaltende Flüssigkeit eine Düse für das Fällfluid zugeordnet. Die Düsenöffnungen sind mindestens so breit wie die Austrittsöffnungen. Diese Düsenöffnungen für das Fällfluid haben bevorzugt einen schlitzartigen Querschnitt, dessen Mittelebene in der Ebene der Austrittsöffnungen oder etwas darüber liegt. Die Zuleitung für das Fällfluid hat unmittelbar am düsenförmigen Ende ihre engste Stelle; dadurch läßt sich fast das gesamte Druckgefälle zur Erzeugung einer großen Strahlgeschwindigkeit nutzen.

Die Austrittsöffnungen für die Flüssigkeit, die das zu fällende Polymere enthält, können zylindrische Bohrungen in der Düsenplatte sein. Sie können auch kegelförmig sein und oberhalb der Oberfläche der Düsenplatte enden.

In jeder Austrittsöffnung kann ein zylindrischer Einsatz angebracht sein, dessen Umfangsfläche mit dem Rand der Austrittsöffnung einen Ringspalt mit konstanter Breite bildet. Das Ende dieses Einsatzes liegt in oder annähernd in der Ebene der Austrittsöffnungen; er ragt nicht oder nur unwesentlich aus der Ebene hervor. Der Einsatz kann auch kegelstumpfförmig sein, in Richtung seiner Achse verschiebbar sein und mit dem Rand der Austrittsöffnung einen Ringspalt mit veränderbarer Breite bilden.

Der Einsatz kann aus einem kegelstumpfförmigen Teil und einem daran anschließenden zylindrischen Teil bestehen, dessen Durchmesser bevorzugt genau so groß ist wie der Durchmesser der Austrittsöffnung, wobei die Basis des Kegelstumpfes gegebenenfalls einen etwas kleineren Durchmesser als der zylindrische Teil hat. Ein derartiger Einsatz ist bevorzugt soweit in Richtung seiner Achse verschiebbar, bis der zylindrische Teil die Austrittsöffnung durchdringt.

Mit der erfindungsgemäßen Vorrichtung wird das erfindungsgemäße Verfahren durchgeführt, dessen kennzeichnende Merkmale in Anspruch 15 angegeben sind.

Der Strahl der polymerhaltigen Flüssigkeit trifft unter einem annähernd rechten Winkel auf den Strahl mindestens eines Fällfluids. Beide Strahlen münden in den Fällraum, der annähernd vollständig mit Flüssigkeit gefüllt ist. Das gefällte Polymere wird im Entgasungsraum annähernd vollständig entgast und gelangt in einen Behälter, wo sich die Gasphase von der Flüssigphase trennt. Aus dem Behälter wird eine Flüssigkeit mit ausgefälltem Polymeren abgezogen. Der Behälter enthält im allgemeinen einen Rührer. Es ist zweckmäßig eines der Fällfluide im Kreislauf zu führen, wobei der Kreislauf durch den Trennbehälter geht. Dieses Fällfluid ist im allgemeinen das erste Fällfluid.

Zum Fällen von Synthesekautschuk aus einer polymerhaltigen Flüssigkeit, die im wesentlichen aus Hexan besteht, wird heißes unter Druck stehendes Wasser oder Wasserdampf als zweites Fällfluid benutzt. Der Strahl der polymerhaltigen Flüssigkeit ist bevorzugt ein hohler dünnwandiger Strahl aus einer ringförmigen Austrittsöffnung. Der größte Teil der zum Fällen benötigten Wärme wird mittels eines der Fällfluide in den Fällraum geleitet. Zumindest ein Fällfluid trifft mit sehr hoher Geschwindigkeit senkrecht auf den Strahl der das zu fällende Polymere enthaltenden Flüssigkeit.

In den Fällraum werden bevorzugt drei Stoffströme eingeleitet: die das zu fällende Polymere enthaltende Flüssigkeit und die beiden zum Fällen benutzten Fluide, von denen das eine bevorzugt im Kreislauf geführt wird.

Die Verweilzeit der Flüssigkeit mit gefällten Polymeren im Entgasungsraum beträgt 10 bis 100 Sekunden.

Falls das gefällte Polymere in einer Entgasungsstufe nicht hinreichend weit entgast werden kann, wird die Suspension mit dem gefällten Polymeren durch weitere Entgasungsstufen geführt.

Bei den Flüssigkeiten, die das auszufällende Polymere enthalten, kann es sich um Flüssigkeiten handeln, die im wesentlichen aus Wasser oder aus einer organischen Flüssigkeit, wie Hexan, Benzol, Toluol, Trivinylcyclohexan, Methylenchlorid, Propen oder Styrol bestehen. Das Polymere kann z. B. ein Thermoplast, ein Synthesekautschuk oder Naturkautschuk sein.

Die erfindungsgemäße Vorrichtung und das erfindungsgemäße Verfahren haben folgende Vorteile:

- Der Fällvorgang verläuft überwiegend in der Flüssigphase und das gefällte Polymere wird mit der flüssigen Phase abgeführt.
- Die Teilchen des gefällten Polymeren bleiben ständig in Kontakt mit einer Flüssigkeit. Zusammenbackungen werden verhindert.

- Die Vorrichtung und das Verfahren sind auch bei polymerhaltigen Flüssigkeiten anzuwenden, aus denen ein stark klebendes Polymer gefällt wird.
- Die Teilchengrößenverteilung der Krümel ist schmaler als bei anderen Fällverfahren. Die Teilchen haben jetzt eine von Kapillaren durchsetzte Struktur und sind weniger kompakt als die nach anderen Verfahren gefällten Teilchen.
- Die Verweilzeit des gefällten Polymeren im Entgasungsraum und der Entgasungseffekt sind einstellbar. Im Entgasungsraum werden die gefällten Teilchen auf erhöhter Temperatur gehalten. Der Restgehalt an entgasungsfähigen Stoffen wird verringert und ist deutlich gleichmäßiger als bei anderen Fällverfahren.
- Durch die gleichmäßige Teilchengröße wird zum Entgasen eine geringere Energie als sonst benötigt, wodurch die Wirtschaftlichkeit erhöht wird.
- Die polymerhaltige Flüssigkeit wird bis zur Austrittsöffnung auf einem bestimmten Druck gehalten, der über den freien Querschnitt der mit einem Einsatz versehenen Austrittsöffnung beeinflußt werden kann.
- Die Austrittsöffnungen lassen sich ohne Zerlegen der Vorrichtung und praktisch ohne Betriebsunterbrechung durch Einfahren der stößelartigen Einsätze reinigen.
- Ein (Rühr-)Behälter kann mehrere Fällvorrichtungen mit Kreislaufflüssigkeit versorgen und Flüssigkeit mit gefälltem Polymeren von mehreren Fällvorrichtungen aufnehmen.
- Zum Fällen werden keine verfahrensfremden chemischen Stoffe be-nötigt.
- Die Fällfluide schaffen keine Probleme beim Entsorgen.
- Beim erfindungsgemäßen Fällverfahren mit Wasserdampf als Fluid treten praktisch keine Abfallflüssigkeit und kein säurehaltiges Abwasser auf.
- Die Flüssigkeit im Rührbehälter wird nicht mit dem Lösemitteldampf belastet; sie enthält nur recht geringe Mengen an Lösemittel.

Die erfindungsgemäße Vorrichtung wird an Hand der Figuren weiter erläutert.

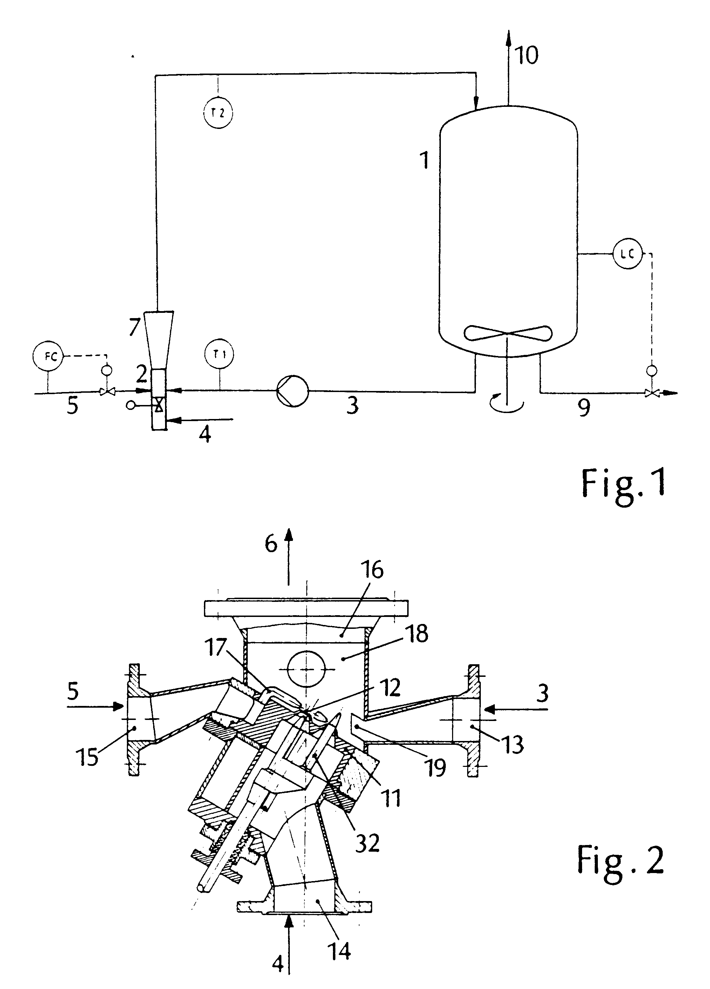

Figur 1 zeigt die wesentlichen Apparate, die für das Fällverfahren mit zwei Fällfluiden benötigt werden, wobei das erste Fällfluid im Kreislauf geführt wird. Dazu gehören der Behälter (1), vorzugsweise mit Rührer, die erfindungsgemäße Fällvorrichtung (2), der Entgasungsraum (7), eine Pumpe für das im Kreislauf geführte erste Fällfluid, Rohrleitungen mit Absperrvorrichtungen und Meßeinrichtungen für Durchfluß, Temperatur und Standhöhe.

Die Fällvorrichtung (2) wird aus dem Behälter (1) über die Zuleitung (3) mit dem ersten Fällfluid versorgt, über Zuleitung (4) mit der Flüssigkeit, die das zu fällende Polymere enthält, und über Zuleitung (5) mit dem zweiten zum Fällen benutzten Fluid. Die Mischung mit dem gefällten Polymeren verläßt die Fällvorrichtung über die Ableitung, durchläuft den Entgasungsraum (7) und wird in den Dampfraum des Behälters (1) geleitet. Aus dem Behälter (1) wird eine Dispersion des gefällten Polymeren über die Ableitung (9) entnommen.

Das beim Entgasen entstehende Gas verläßt den Behälter über die Ableitung (10) und wird der Aufarbeitung zugeführt.

In Figur 2 ist eine erfindungsgemäße Fällvorrichtung für zwei Fällfluide beispielhaft gezeigt. Die Düsenplatte (11) enthält Austrittsöffungen (12) für die polymerhaltige Flüssigkeit (14), die über Zuleitung (4) eingespeist wird. Das erste Fällfluid (13) wird über Zuleitung (3) zu der Düse (19) geleitet. Das zweite Fällfluid (15) wird über Zuleitung (5) zu den Düsen (17) geleitet. Jeder Austrittsöffnung (12) ist eine Düse (17) zugeordnet. Die drei Stoffströme vermischen sich im Fällraum (18). Die Mischung mit gefälltem Polymeren (16) verläßt den Fällraum über die Ableitung (6). Die Austrittsöffnungen (12) sind mit stößelartigen achsial verschiebbaren Einsätzen (32) - dargestellt in unterschiedlicher Position - versehen.

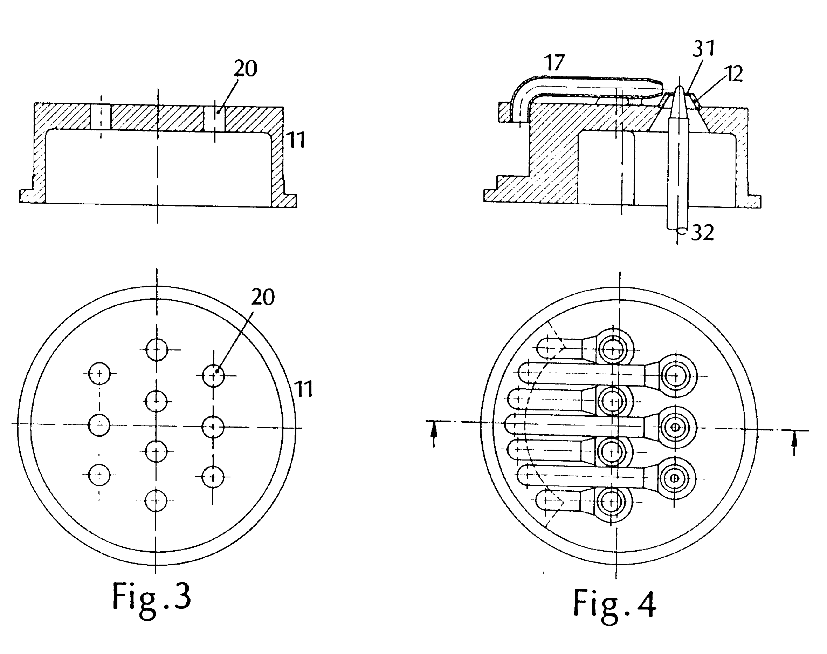

Figur 3 zeigt mehrere zylindrische Bohrungen (20) in der Düsenplatte (11), und zwar im Querschnitt und in der Ansicht von der Austrittsseite.

Figur 4 zeigt eine andere Ausführung der Austrittsöffnungen (12) mit Einsatz (32) und Ringspalt (31) sowie die Anordnung der Düsen (17) für das zweite Fällfluid, und zwar im Querschnitt und in der Ansicht von der Austrittsseite.

Das mit der erfindungsgemäßen Vorrichtung durchgeführte Verfahren wird an folgenden Beispielen weiter erläutert.


Beispiel 1a: Vergleichsversuch


Für den Vergleichsversuch wird eine Vorrichtung eingesetzt, die im wesentlichen aus folgenden Apparaten besteht: Dem Rührbehälter (1), einer Pumpe für das Fällfluid, dem Fällraum (18), einem Entgasungsrohr (7) und der Rückleitung zum Dampfraum des Rührbehälters.

Der Fällraum wird auf der Unterseite von einer Lochplatte begrenzt, die vier zylindrische Bohrungen mit 25 mm Durchmesser hat. Parallel zur Oberfläche dieser Platte wird das Fällfluid durch ein einfaches Rohr eingeleitet. Der Rohrmündung gegenüber wird Wasserdampf durch ein einfaches Rohr eingeleitet. Die das gefällte Polymere enthaltende Flüssigkeit gelangt aus dem Fällraum in das vertikal angeordnete Entgasungsrohr.

### Beispiel 1b: Erfindungsgemäßer Versuch

Für den Versuch nach dem erfindungsgemäßen Verfahren wird der Fällraum mit Lochplatte ersetzt durch die erfindungsgemäße Vorrichtung. Diese hat sieben Austrittsöffnungen mit 16 mm Durchmesser und Einsatz. Jeder Austrittsöffnung ist eine Düse für das zweite Fällfluid zugeordnet, die aus einem Rohr mit 16 mm Durchmesser besteht und am Ende in einen Schlitz mit 25 mm Breite übergeht. Die Leitungsführung stimmt überein mit der des Vergleichsversuchs.

Die Ergebnisse für beide Versuche sind in Tabelle 1 angegeben. Beim erfindungsgemäßen Verfahren sind der mittlere Krümeldurchmesser und die Spannweite des Krümeldurchmessers nur halb so groß wie beim Vergleichsversuch. Der Lösemittelgehalt des nach dem erfindungsgemäßen Verfahren gefällten Polymeren beträgt nur 60 % des Lösemittelgehaltes der Krümel aus dem Vergleichsversuch.

### Beispiel 2a: Vergleichsversuch

Für den weiteren Vergleichsversuch wird eine Vorrichtung analog zum Vergleichsversuch in Beispiel 1a eingesetzt.

Der Fällraum wird auf der Unterseite jedoch von einer Lochplatte begrenzt, die nur eine zylindrische Bohrung mit 30 mm Durchmesser hat. Parallel zur Oberfläche dieser Platte wird das Fällfluid durch ein einfaches Rohr eingeleitet. Das Fällfluid stammt bei diesem Beispiel teilweise aus dem Behälter (1), teilweise aus der über die Leitung (9) abgezogenen Suspension, nachdem aus dieser die Krümel weitgehend abgeschieden wurden. Dieser Teil der Flüssigkeit hat eine etwas höhere Temperatur als die aus dem Behälter entnommene Flüssigkeit. Beim Vergleichsversuch wird kein Dampf in den Fällraum geleitet. Die das gefällte Polymere enthaltende Flüssigkeit gelangt vom Fällraum in das vertikal angeordnete Entgasungsrohr.

### Beispiel 2b: Erfindungsgemäßer Versuch

Für das erfindungsgemäße Verfahren wird der Fällraum mit Lochplatte durch die in Beispiel 1b angegebene erfindungsgemäße Vorrichtung ersetzt.

Die Ergebnisse für beide Versuche sind in Tabelle 2 angegeben. Wiederum ist beim erfindungsgemäßen Verfahren der mittlere Krümeldurchmesser nur halb so groß wie beim Vergleichsversuch. Die Spannweite des Krümeldurchmessers beträgt nur etwa ein Drittel der Spannweite beim Vergleichsversuch. Der Lösemittelgehalt des gefällten Polymeren beträgt nur 60 % des Lösemittelgehalts der Krümel aus dem Vergleichsversuch.

### Beispiel 3a: Vergleichsversuch

Für den weiteren Vergleichsversuch wird eine Vorrichtung analog zum Vergleichsversuch in Beispiel 1a eingesetzt, jedoch mit folgendem Unterschied: Die das gefällte Polymere enthaltende Flüssigkeit wird in den mit Flüssigkeit gefüllten Raum des Rührbehälters (1) zurückgeführt.

Der Fällraum stimmt mit dem Fällraum überein, der für den Vergleichsversuch in Beispiel 2a benutzt wurde.

### Beispiel 3b: Erfindungsgemäßer Versuch

Für das erfindungsgemäße Verfahren wird der Fällraum mit Lochplatte durch die in Beispiel 1b angegebene erfindungsgemäße Vorrichtung ersetzt.

Die Ergebnisse für beide Versuche sind in Tabelle 3 angegeben. Wiederum ist beim erfindungsgemäßen Verfahren der mittlere Krümeldurchmesser weniger als halb so groß wie beim Vergleichsversuch. Die Spannweite des Krümeldurchmessers beträgt nur etwa die Hälfte der Spannweite beim Vergleichsversuch. Der Lösemittelgehalt des gefällten Polymeren beträgt nur 40 % des Lösemittelgehalts der Krümel aus dem Vergleichsversuch.

## Tabelle 1 (zu Beispiel 1)

| | Vergleichs-Versuch | Versuch nach dem erfindungsgemäßen Verfahren | |
|---|---|---|---|
| Temperatur im Rührbehälter | 85 | 85 | °C |
| Druck im Rührbehälter | 300 | 300 | mbar |
| Durchsatz des im Kreislauf geführten ersten Fällfluids | 150 | 150 | $m^3/h$ |
| Durchsatz an hexanischer Polymerlösung | 10 | 10 | t/h |
| Feststoffgehalt der Polymerlösung | 10,0 | 10,0 | % |
| Durchsatz des zweiten Fällfluids (Wasserdampf) | 0,5 | 0,5 | t/h |
| Temperatur T1 des im Kreislauf geführten Fällfluids vor dem Eintritt in den Fällraum | 85 | 85 | °C |
| Temperatur T2 der Mischung nach dem Austritt aus dem Entgasungsrohr | 78 | 78 | °C |
| Mittlerer Krümeldurchmesser | 20 | 10 | mm |
| Spannweite des Krümeldurchmessers | 5 - 25 | 4 - 12 | mm |
| Lösemittelgehalt der Krümel | - | 60 % des Gehalts beim Vergleichsversuch | |

## Tabelle 2 (zu Beispiel 2)

| | Vergleichs-Versuch | Versuch nach dem erfindungsgemäßen Verfahren | |
|---|---|---|---|
| Temperatur im Rührbehälter | 85 | 85 | °C |
| Druck im Rührbehälter | 35 | 35 | mbar |
| Durchsatz des im Kreislauf geführten ersten Fällfluids | 60 | 60 | $m^3$/h |
| Durchsatz an benzolischer Polymerlösung | 8 | 8 | t/h |
| Feststoffgehalt der Polymerlösung | 12,5 | 12,5 | % |
| Durchsatz des zweiten Fällfluids (Wasserdampf) | 0 | 0,8 | t/h |
| Temperatur T1 des im Kreislauf geführten Fällfluids vor dem Eintritt in den Fällraum | 91 | 91 | °C |
| Temperatur T2 der Mischung nach dem Austritt aus dem Entgasungsrohr | 77 | 84 | °C |
| Mittlerer Krümeldurchmesser | 7 | 4 | mm |
| Spannweite des Krümeldurchmessers | 4 - 10 | 3 - 5 | mm |
| Lösemittelgehalt der Krümel | - | 60 % des Gehalts beim Vergleichsversuch | |

EP 0 462 317 B1

### Tabelle 3 (zu Beispiel 3)

| | Vergleichs-Versuch | Versuch nach dem erfindungsgemäßen Verfahren | |
|---|---|---|---|
| Temperatur im Rührbehälter | 93 | 85 | °C |
| Druck im Rührbehälter | 50 | 50 | mbar |
| Durchsatz des im Kreislauf geführten ersten Fällfluids | 60 | 60 | $m^3/h$ |
| Durchsatz an benzolischer Polymerlösung | 18 | 21 | t/h |
| Feststoffgehalt der Polymerlösung | 14 | 14 | % |
| Durchsatz des zweiten Fällfluids (Wasserdampf) | 0 | 1,5 | t/h |
| Temperatur T1 des im Kreislauf geführten Fällfluids vor dem Eintritt in den Fällraum | 93 | 85 | °C |
| Temperatur T2 der Mischung nach dem Austritt aus dem Entgasungsrohr | 73 | 72 | °C |
| Mittlerer Krümeldurchmesser | 25 | 10 | mm |
| Spannweite des Krümeldurchmessers | 10 - 35 | 5 - 15 | mm |
| Lösemittelgehalt der Krümel | - | 40 % des Gehalts beim Vergleichsversuch | |

**Patentansprüche**

1. Vorrichtung zum Fällen von gelösten oder emulgierten oder suspendierten Polymeren in Flüssigphase mit Hilfe mindestens eines Fällfluids, gekennzeichnet durch
   - eine Düsenplatte (11) mit einer oder mehreren Austrittsöffnungen (12) für die Flüssigkeit (14), die das auszufällende Polymere enthält, wobei die Austrittsöffnungen (12) mit der Zuleitung (4) in Verbindung stehen,
   - eine oder mehrere Düsen für mindestens ein Fällfluid, deren Achsen annähernd senkrecht zur Achse der Austrittsöffnungen (12) angeordnet sind,
   - einen annähernd vollständig mit Flüssigkeit gefüllten Fällraum (18), der auf der Seite der Düsenplatte (11) liegt, auf der auch die Düsen für mindestens ein Fällfluid liegen,
   - eine Ableitung (6) zum Ableiten der Mischung (16), die das gefällte Polymere enthält,
   - einen Entgasungsraum (7), der an die Ableitung (6) angeschlossen ist.

2. Vorrichtung nach Anspruch 1, gekennzeichnet durch

8

- eine Düse (19) für das erste Fällfluid (13), deren Achse annähernd senkrecht zur Achse der Austrittsöffnungen (12) angeordnet ist, wobei die Düse (19) mit der Zuleitung (3) in Verbindung steht, und das erste Fällfluid (13) im Kreislauf geführt wird.

3. Vorrichtung nach den Ansprüchen 1 und 2, gekennzeichnet durch
- Düsen (17) für das zweite Fällfluid (15), deren Achsen annähernd senkrecht zur Achse der Austrittsöffnungen (12) angeordnet sind, wobei die Düsen (17) mit der Zuleitung (5) in Verbindung stehen und jeder Austrittsöffnung (12) eine Düse (17) zugeordnet ist.

4. Vorrichtung nach den Ansprüchen 1 bis 3, gekennzeichnet durch
- einen Fällraum (18), dessen Achse im wesentlichen vertikal verläuft.

5. Vorrichtung nach den Ansprüchen 1 bis 4, gekennzeichnet durch
-eine Düsenplatte (11), deren Senkrechte auf der Oberfläche einen Winkel von 10 bis 60 Grad mit der Achse der Ableitung für die das gefällte Polymere enthaltende Flüssigkeit bildet.

6. Vorrichtung nach den Ansprüchen 1 bis 5, gekennzeichnet durch
-einen Entgasungsraum (7) in Form eines Rohres, dessen Querschnitt konstant bleibt oder am Ende des Rohres bis zum 25fachen des Querschnittes zunimmt, den das Entgasungsrohr am Anfang hat, und dessen Länge das 30- bis 60fache des Durchmessers am Rohranfang ist.

7. Vorrichtung nach den Ansprüchen 1 bis 6,
-bei der jede Düse (17) einer Austrittsöffnung (12) zugeordnet ist.

8. Vorrichtung nach den Ansprüchen 1 bis 7, gekennzeichnet durch
-Düsenöffnungen (17), die mindestens so breit sind wie die Austrittsöffnungen (12), wobei die Düsenöffnungen (17) bevorzugt einen schlitzartigen Querschnitt als Drosselstelle haben.

9. Vorrichtung nach den Ansprüchen 1 bis 8, gekennzeichnet durch
-Austrittsöffnungen für die polymerhaltige Flüssigkeit, die aus Bohrungen (20) in der Düsenplatte (11) bestehen.

10. Vorrichtung nach den Ansprüchen 1 bis 9, gekennzeichnet durch
-Austrittsöffnungen für die polymerhaltige Flüssigkeit, deren Ebene in oder unterhalb der Mittelebene der Düsenöffnungen (17) liegt.

11. Vorrichtung nach den Ansprüchen 1 bis 10, gekennzeichnet durch
-einen zylindrischen Einsatz für jede Austrittsöffnung, der in die Austrittsöffnung für die polymerhaltige Flüssigkeit hineinragt und mit dem Rand der Austrittsöffnung einen Ringspalt (31) mit konstanter Breite bildet und dessen Ende in oder annähernd in der Ebene der Austrittsöffnung liegt.

12. Vorrichtung nach den Ansprüchen 1 bis 11, gekennzeichnet durch
-einen kegelstumpfförmigen Einsatz für jede Austrittsöffnung, der in Richtung seiner Achse verschiebbar ist und mit dem Rand der Austrittsöffnung einen Ringspalt (31) mit veränderbarer Breite bildet.

13. Vorrichtung nach den Ansprüchen 1 bis 12, gekennzeichnet durch
-einen Einsatz (32), der aus einem kegelstumpfförmigen Teil und einem daran anschließenden zylindrischen Teil besteht, dessen Durchmesser genauso groß ist wie der Durchmesser der Austrittsöffnung, wobei die Basis des Kegelstumpfes gegebenenfalls einen etwas kleineren Durchmesser als der zylindrische Teil hat.

14. Vorrichtung nach den Ansprüchen 1 bis 13, gekennzeichnet durch
-einen Einsatz (32), der in Richtung seiner Achse soweit verschiebbar ist, bis sein zylindrischer Teil die Austrittsöffnung (12) durchdringt.

15. Verfahren zum Fällen von gelösten und emulgierten oder suspendierten Polymeren in Flüssigphase mit Hilfe mindestens eines Fluids, gekennzeichnet durch
- Zusammenführen eines Strahls der polymerhaltigen Flüssigkeit mit einem Strahl des ersten Fällfluids, wobei sich diese Strahlen unter einem annähernd rechten Winkel treffen,
- beide Strahlen in einen annähernd vollständig mit Flüssigkeit gefüllten Fällraum eintreten, der mit dem ersten Fällfluid beschickt wird und aus dem die Mischung mit gefälltem Polymeren über einen Entgasungsraum abgezogen wird.

16. Verfahren nach Anspruch 15, gekennzeichnet durch
-Führen des ersten Fällfluids im Kreislauf, der den Behälter (1) enthält, und Einleiten der Mischung mit gefälltem Polymeren in den Dampfraum des Behälters (1).

17. Verfahren nach den Ansprüchen 15 und 16, gekennzeichnet durch
-einen hohlen dünnwandigen Strahl der polymerhaltigen Flüssigkeit.

18. Verfahren nach den Ansprüchen 15 bis 17, gekennzeichnet durch
-Zuführen des größten Teils der für das Fällen benötigten Wärme mittels eines zweiten dampfförmigen Fällfluids.

19. Verfahren nach den Ansprüchen 15 bis 18, gekennzeichnet durch
-Wasserdampf als zweites Fluid zum Fällen von Synthesekautschuk aus einer polymerhaltigen Flüssigkeit, die im wesentlichen aus Hexan oder Benzol oder Toluol besteht.


**Claims**

1. An apparatus for precipitating dissolved or emulsified or suspended polymers in the liquid phase with the aid of at least one precipitant fluid, characterised by
   - a nozzle plate (11) having one or more outlet orifices (12) for the liquid (14) which contains the polymer to be precipitated, the outlet orifices (12) being connected to the feed line (4),
   - one or more nozzles for at least one precipitant fluid, the axes of which are arranged almost perpendicularly to the axis of the outlet orifices (12),
   - a precipitation space (18), which is almost completely filled with liquid and which is on the side of the nozzle plate (11) on which the nozzles for at least one precipitant fluid are also situated,
   - an outlet (6) for discharging the mixture (16) which contains the precipitated polymer,
   - a degassing space (7) which is connected to the outlet (6).

2. An apparatus according to claim 1, characterised by
   - a nozzle (19) for the first precipitant fluid (13), the axis of which is arranged almost perpendicularly to the axis of the outlet orifices (12), the nozzle (19) being connected to the feed line (3), whereby the first precipitant fluid (13) is circulated.

3. An apparatus according to either of claims 1 and 2, characterised by
   - nozzles (17) for the second precipitant fluid (15), the axes of which are arranged almost perpendicularly to the axis of the outlet orifices (12), the nozzles (17) being connected to the feed line (5) and each outlet orifice (12) being associated with a nozzle (17).

4. An apparatus according to any of claims 1 to 3, characterised by
   - a precipitation space (18), the axis of which runs essentially vertically.

5. An apparatus according to any of claims 1 to 4, characterised by
   - a nozzle plate (11), in respect of which the perpendicular to the surface forms an angle from 10 to 60 degrees with the axis of the outlet for the liquid containing the precipitated polymer.

6. An apparatus according to any of claims 1 to 5, characterised by
   - a degassing space (7) in the form of a tube, the cross-section of which remains constant or increases at the end of the tube up to 25 times the cross-section which the degassing tube has at the beginning and the length of which is 30 to 60 times the diameter at the beginning of the tube.

7. An apparatus according to any of claims 1 to 6,
   - in which each nozzle (17) is associated with an outlet orifice (12).

8. An apparatus according to any of claims 1 to 7, characterised by
   - nozzle orifices (17), which are at least as wide as the outlet orifices (12), the nozzle orifices (17) preferably having a slot-like cross-section as throttling point.

9. An apparatus according to any of claims 1 to 8, characterised by
- outlet orifices for the polymer-containing liquid, which are composed of bore holes (20) in the nozzle plate (11).

10. An apparatus according to any of claims 1 to 9, characterised by
- outlet orifices for the polymer-containing liquid, the plane of which lies in or beneath the central plane of the nozzle orifices (17).

11. An apparatus according to any of claims 1 to 10, characterised by
- a cylindrical insert for each outlet orifice, which insert projects into the outlet orifice for the polymer-containing liquid and, with the edge of the outlet orifice, forms an annular gap (31) having constant width and the end of which insert lies in or almost in the plane of the outlet orifice.

12. An apparatus according to any of claims 1 to 11, characterised by
- a truncated cone-shaped insert for each outlet orifice, which insert is displaceable in the direction of its axis and, with the edge of the outlet orifice, forms an annular gap (31) having changeable width.

13. An apparatus according to any of claims 1 to 12, characterised by
- an insert (32) which is composed of a truncated cone-shaped part and a cylindrical part connected thereto, the diameter of which is just as large as the diameter of the outlet orifice, the base of the truncated cone if desired having a somewhat smaller diameter than the cylindrical part.

14. An apparatus according to any of claims 1 to 13, characterised by
- an insert (32) which is displaceable in the direction of its axis until its cylindrical part penetrates the outlet orifice (12).

15. A process for precipitating dissolved and emulsified or suspended polymers in the liquid phase with the aid of at least one fluid, characterised by
- combining a jet of the polymer-containing liquid with a jet of the first precipitant fluid, these jets meeting almost at a right angle,
- both jets entering a precipitation space which is almost completely filled with liquid, which is charged with the first precipitant fluid and from which the mixture containing precipitated polymer is withdrawn via a degassing space.

16. A process according to claim 15, characterised by
- conducting the first precipitant fluid in a circulation loop which includes the vessel (1) and introducing the mixture containing precipitated polymer into the vapour space of the vessel (1).

17. A process according to either of claims 15 and 16, characterised by
- a hollow thin-walled jet of the polymer-containing liquid.

18. A process according to any of claims 15 to 17, characterised by
- supplying the majority of the heat needed for the precipitation by means of a second vaporous precipitant fluid.

19. A process according to any of claims 15 to 18, characterised by
- steam as the second fluid for precipitating synthetic rubber from a polymer-containing liquid which is essentially composed of hexane or benzene or toluene.

**Revendications**

1. Dispositif pour précipiter des polymères dissous ou émulsionnés ou en suspension, en phase liquide, à l'aide d'un fluide de précipitation au moins, caractérisé par :
- une platine (11) à buse comportant une ou plusieurs ouvertures (12) de sortie pour le liquide (14) qui renferme le polymère à précipiter, les ouvertures (12) de sortie étant en liaison avec la conduite d'alimentation (4),

- une ou plusieurs buses pour un fluide de précipitation au moins, et dont les axes sont disposés sensiblement perpendiculairement à l'axe des ouvertures (12) de sortie,
- une chambre (18) de précipitation sensiblement remplie an totalité avec le liquide et reposant sur le côté de la plaque (11) à buse, sur laquelle repose également les buses pour au moins un fluide de précipitation,
- une conduite (6) d'évacuation pour évacuer le mélange (16) renfermant le polymère précipité,
- une chambre (7) de dégazage qui est raccordée à la tubulure (6) d'évacuation.

2. Dispositif selon la revendication 1, caractérise par :
   - une buse (19) pour le premier fluide (13) de précipitation, dont l'axe est disposé sensiblement perpendiculairement à l'axe des ouvertures (12) de sortie, la buse (19) étant en liaison avec la conduite d'admission (3), et le premier fluide (13) de précipitation étant mis en circulation.

3. Dispositif selon les revendications 1 et 2, caractérisé par :
   - des buses (17) pour le second fluide (15) de précipitation et dont les axes sont disposés sensiblement perpendiculairement à l'axe des ouvertures (12) de sortie, les buses (17) étant en liaison avec la tubulure d'admission (5) et une buse (17) étant adjointe à chaque ouverture (12) de sortie.

4. Dispositif selon les revendications 1 à 3, caractérisé par :
   - une chambre (18) de précipitation dont l'axe s'étend sensiblement verticalement.

5. Dispositif selon les revendications 1 à 4, caractérisé par :
   - une plaque (11) à buse dont la perpendiculaire sur la surface forme un angle de 10 à 60° avec l'axe de la conduite d'évacuation pour le liquide renfermant le polymère précipité.

6. Dispositif selon les revendications 1 à 5, caractérisé par :
   - une chambre (7) de dégazage en forme de tube dont la section transversale reste constante ou augmente à l'extrémité du tube jusqu'à 25 fois la section que le tube de dégazage présente au début, et dont la longueur est de 30 à 60 fois le diamètre au début du tube.

7. Dispositif selon les revendications 1 à 6, caractérisé par :
   - à chaque buse (17) est associée une ouverture (12) de sortie.

8. Dispositif selon les revendications 1 à 7, caractérisé par :
   - des ouvertures (17) de buse, qui sont au moins aussi larges que les ouvertures (12) de sortie, les ouvertures (17) des buses ayant de préférence une section en forme de fente comme point d'étranglement.

9. Dispositif selon les revendications 1 à 8, caractérisé par :
   - des ouvertures de sortie pour le liquide renfermant le polymère, qui sont constituées par des perçages (20) pratiqués dans la plaque (11) à buses.

10. Dispositif selon les revendications 1 à 9, caractérisé par :
    - des ouvertures de sortie pour le liquide renfermant le polymère et dont le plan se situe à l'intérieur ou en dessous du plan médian des ouvertures (17) des buses.

11. Dispositif selon les revendications 1 à 10, caractérisé par :
    - une garniture cylindrique pour chaque ouverture de sortie, qui pénètre dans l'ouverture de sortie pour le liquide renfermant le polymère et forme avec le bord de l'ouverture de sortie une fente (31) annulaire de largeur constante et dont l'extrémité se situe à l'intérieur ou sensiblement à l'intérieur du plan de l'ouverture de sortie.

12. Dispositif selon les revendications 1 à 11, caractérisé par :
    - une garniture tronconique pour chaque ouverture de sortie, qui est déplaçable dans le sens de son axe et forme avec le bord de l'ouverture de sortie une fente (31) annulaire de largeur pouvant être modifiée.

13. Dispositif selon les revendications 1 à 12, caractérisé par :
    - une garniture (32), qui est constituée par une partie tronconique et par une partie cylindrique s'y raccordant, dont le diamètre est aussi grand que le diamètre de l'ouverture de sortie, la base du tronc de cône ayant éventuellement un diamètre un peu plus petit que la partie cylindrique.

**14.** Dispositif selon les revendications 1 à 13, caractérisé par :
- une garniture (32), qui peut être déplacée dans le sens de son axe jusqu'à ce que sa partie cylindrique traverse l'ouverture (12) de sortie.

**15.** Procédé pour précipiter des polymères dissous et émulsionnés ou en suspension, en phase liquide, à l'aide d'un fluide au moins,
caractérisé par :
- la délivrance conjointe d'un jet du liquide renfermant le polymère et d'un jet du premier fluide de précipitation, ces jets se rencontrant sensiblement à angle droit,
- les deux jets pénètrent dans une chambre de précipitation sensiblement remplie en totalité avec le liquide et chargée avec le premier fluide de précipitation et de laquelle le mélange contenant le polymère précipité est soutiré par l'intermédiaire d'une chambre de dégazage.

**16.** Procédé selon la revendication 15, caractérisé par :
- la mise en circulation du premier fluide de précipitation dans le circuit renfermant le récipient (1) et l'introduction du mélange avec le polymère précipité dans la chambre d'évaporation du récipient (1).

**17.** Procédé selon les revendications 15 et 16, caractérisé par :
- un jet creux, à parois minces, du liquide renfermant le polymère.

**18.** Procédé selon les revendications 15 à 17, caractérisé par :
- l'apport de la plus grande partie de la chaleur nécessaire à la précipitation à l'aide d'un second fluide de précipitation sous forme de vapeur.

**19.** Procédé selon les revendications 15 à 18, caractérisé par :
- l'utilisation de vapeur d'eau comme second fluide pour précipiter le caoutchouc synthétique à partir d'un liquide renfermant le polymère et constitué essentiellement par de l'hexane ou du benzène ou du toluène.

Fig.1

Fig.2

EP 0 462 317 B1

20

11

Fig.3

17    31    12

32

Fig.4